# EUROPEAN PATENT APPLICATION

(11) **EP 4 513 774 A1**
(43) Date of publication of application: **26.02.2025**
(21) Application number: 23814667.4
(22) Date of filing: 23.02.2023
(51) Int. Cl.: H04B 7/0413

(54) **COMMUNICATION METHOD AND APPARATUS**

(30) Priority: 31.05.2022 CN 202210611900
(71) Applicant: Huawei Technologies Co., Ltd., Shenzhen, Guangdong 518129 (CN)
(72) Inventor: ZHANG, Liwen, Shenzhen, Guangdong 518129 (CN); XU, Zhou, Shenzhen, Guangdong 518129 (CN); LI, Yingrui, Shenzhen, Guangdong 518129 (CN)
(74) Representative: MERH-IP Matias Erny Reichl Hoffmann Patentanwälte PartG mbB
(86) International application number: PCT/CN2023/077965
(87) International publication number: WO 2023/231468

(57) **Abstract**

This application relates to a communication method and apparatus. An access network device determines that a first beam of a first cell meets a load migration condition, and the access network device evaluates performance of the first terminal device on N candidate beams based on information about the N candidate beams. When determining, based on the result of the evaluation, that there is a first candidate beam meeting a performance requirement in the N candidate beams, the access network device migrates the first terminal device to a second cell to which the first candidate beam belongs. Load balancing of the first beam is implemented through load migration. In addition, the access network device migrates the terminal device based on a performance evaluation result, for example, migrates the first terminal device to a cell in which a candidate beam with better performance is located. This helps improve communication quality of the first terminal device in the second cell.

## Description

### CROSS-REFERENCE TO RELATED APPLICATIONS

This application claims priority to Chinese Patent Application No. 202210611900.4, filed with the China National Intellectual Property Administration on May 31, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A multiple-input multiple-output (multiple-input multiple-output, MIMO) technology is a technology that multiplies system spectral efficiency. In the MIMO technology, a transmit end and a receive end use a plurality of antennas for communication with the assistance of a signal processing technology. In combination of the application of technologies including a receive diversity technology, a beamforming technology, and a spatial multiplexing technology, the use of the MIMO technology can offer receive diversity gains, beamforming gains, spatial multiplexing gains, and the like, further increasing a system capacity and improving spectral efficiency.

In the MIMO technology, communication is implemented by using beams (beam). A base station transmits one or more beams at different angles, and any one of the beams may serve one or more different terminal devices. However, a quantity of terminal devices served by each beam is limited. If a beam serves terminal devices whose quantity exceeds a specific threshold, communication quality of these terminal devices is affected.

### SUMMARY

Embodiments of this application provide a communication method and apparatus, to improve communication performance of a terminal device.

According to a first aspect, a communication method is provided. The method may be performed by an access network device, may be performed by another device including a function of the access network device, or may be performed by a chip system or another functional module. The chip system or the functional module can implement the function of the access network device, and the chip system or the functional module is, for example, disposed in the access network device. Optionally, the access network device is, for example, a base station. The method includes: determining that a first beam of a first cell meets a load migration condition, where the first beam is a serving beam of a first terminal device; evaluating performance of the first terminal device on N candidate beams based on information about the N candidate beams, where the N candidate beams do not belong to the first cell, and N is a positive integer; and when determining, based on a result of the evaluation, that there is a first candidate beam meeting a performance requirement in the N candidate beams, migrating the first terminal device to a second cell to which the first candidate beam belongs.

In this embodiment of this application, the access network device may determine whether a beam meets the load migration condition. If one beam meets the load migration condition, a terminal device on the beam may be migrated to another cell. In this way, a quantity of terminal devices aggregated on a same beam is reduced, so that a terminal device served by the beam can obtain good communication quality. In addition, the access network device migrates the terminal device based on a performance evaluation result, for example, migrates the first terminal device to a cell in which a candidate beam with better performance is located. This helps improve communication quality of the first terminal device in the second cell.

In an optional implementation, the load migration condition includes that load of the first beam is greater than a first threshold.

In other words, determining that the first beam of the first cell meets the load migration condition may be understood as determining that the load of the first beam is greater than the first threshold. Load of one beam may be measured based on a first parameter. The first parameter includes, for example, one or more of parameters such as a quantity of terminal devices covered by the beam, whether there is to-be-transmitted data on the beam, utilization of a CCE on the beam, interference on the beam, or utilization of a PRB on the beam. Correspondingly, a parameter corresponding to the first threshold is the same as a parameter used to measure beam load. If load of one beam is greater than the first threshold, it indicates that the load of the beam is heavy. In other words, a large quantity of terminal devices may be aggregated on the beam, and these terminal devices cannot share a time-frequency resource on the beam. In this case, the access network device needs to separately schedule resources for these terminal devices. Consequently, resource overheads are high. Therefore, in this embodiment of this application, if the load of the first beam is greater than the first threshold, it is considered that the first beam meets the load migration condition, so that some or all load (for example, the terminal device) on the first beam can be migrated to another cell. In this way, a quantity of terminal devices aggregated on a same beam is reduced, improving communication performance of these terminal devices.

The interference on the beam included in the first parameter may be co-channel downlink interference on the beam. The co-channel downlink interference may be understood as that the terminal device may receive a signal from a neighboring access network device in a coverage overlapping area of two or more neighboring access network devices, and the signal may affect demodulation performance of the terminal device. Alternatively, the interference on the beam included in the first parameter may be co-channel uplink interference on the beam. The co-channel uplink interference may be understood as that the access network device may receive signals from different terminal devices in a coverage overlapping area of two or more neighboring access network devices, and the signals may affect demodulation performance of the access network device.

In an optional implementation, the method further includes: determining a quantity K of terminal devices to be migrated out of the first beam, where K is a positive integer. If the load of the first beam needs to be migrated to another beam, an amount of load that can be migrated out of the first beam, namely, K, may be determined, to properly migrate a corresponding amount of load out of the first beam.

In an optional implementation, the determining a quantity K of terminal devices to be migrated out of the first beam includes: determining M candidate beams, where the M candidate beams are different from the first beam, and the M candidate beams do not belong to the first cell; determining a quantity of terminal devices on the first beam to be migrated to each of the M candidate beams, to obtain M quantities in total, where M is a positive integer; and determining a smallest value in the M quantities as K. In this case, a cell to which the load of the first beam is migrated is not determined. Therefore, the smallest value may be determined from the M quantities as K, to reduce an overload probability of another cell (or another beam).

In an optional implementation, the determining a quantity of terminal devices on the first beam to be migrated to each of the M candidate beams includes: determining, based on the load of the first beam and load of each of the candidate beams, the quantity of terminal devices on the first beam to be migrated to each of the candidate beams. A quantity of terminal devices on the first beam to be migrated to one candidate beam may be determined based on the load of the first beam and load of the candidate beam, so that load statuses of the first beam and the candidate beam are considered for a finally determined quantity. This can reduce the load of the first beam, and can also avoid overload of the candidate beam as much as possible.

In an optional implementation, K meets the following relationship: K = min{0.5 × (Load of the first beam - Load of each of the candidate beams)/Load of the first beam} × Quantity of terminal devices in the first cell, where min means to return a smallest value. Optionally, the load of each of the candidate beams belongs to load of the M candidate beams. A manner of determining K is provided herein. In addition, K may alternatively be determined in another manner.

In an optional implementation, each of the candidate beams is determined based on the load of the first beam and the load of each of the candidate beams, where the concept of candidate beam is described in the foregoing. The access network device may determine, based on the load of the first beam and load of another beam, whether the another beam can be used as a candidate beam. For example, if it is determined, based on the load of the first beam and the load of the another beam, that the load of the another beam is light, the another beam may be used as a candidate beam; or if it is determined, based on the load of the first beam and the load of the another beam, that the load of the another beam is heavy, the another beam may not be used as a candidate beam. It is equivalent to that a beam with light load may be used as a candidate beam, to reduce an overload probability of the candidate beam.

In an optional implementation, the method further includes: obtaining load information of each of the candidate beams. One of the M candidate beams is used as an example. The candidate beam belongs to an inter-frequency neighboring cell of a cell in which the first beam is located. If the inter-frequency neighboring cell belongs to another access network device, the another access network device may send load information of a beam in the inter-frequency neighboring cell to the access network device. Alternatively, if the inter-frequency neighboring cell still belongs to the access network device, the access network device does not need to receive load information of a beam in the inter-frequency neighboring cell, but may determine the load information of the beam in the inter-frequency neighboring cell.

In an optional implementation, the method further includes: selecting K' terminal devices from one or more terminal devices served by the first beam, to migrate the K' terminal devices to the N candidate beams, where the first terminal device is one of the K' terminal devices, and K' is a positive integer less than or equal to K. For example, the K' terminal devices are terminal devices that meet a selection condition in the K terminal devices. After determining K, the access network device may select the K terminal devices from the load of the first beam (for example, a terminal device that uses the first beam as a serving beam). However, in the load of the first beam, a quantity of terminal devices that meet the selection condition may be less than K. Therefore, a quantity of terminal devices finally selected by the access network device may be less than or equal to K. In other words, the access network device may finally select the K' terminal devices, and the K' terminal devices are terminal devices to be migrated to another beam.

In an optional implementation, the selection condition includes one or more of the following: the first terminal device is capable of sharing a transmission resource with another terminal device on the first beam, and performance of the first terminal device sharing the transmission resource and/or the another terminal device is lower than a second threshold, where the transmission resource includes a time domain resource and a frequency domain resource; the first terminal device is incapable of sharing a transmission resource with another terminal device on the first beam, where the transmission resource includes a time domain resource and a frequency domain resource; the first terminal device is located at an edge of the first cell; or a traffic volume of the first terminal device is greater than a third threshold. The foregoing one or more may be considered as selection conditions (or selection strategies) of the access network device. In other words, the access network device may select the K terminal devices from the load of the first beam based on the foregoing selection conditions. According to the foregoing terminal device selection strategies, a terminal device that is incapable of sharing a time-frequency resource with another terminal device on a heavy-load beam in a cell may be selected, and load of the terminal device may be redistributed to an idle beam of an inter-frequency neighboring cell. A quantity of terminal devices in a heavy-load beam group is reduced, so that an opportunity for scheduling another terminal device is increased. In addition, when being scheduled on the idle beam of the inter-frequency neighboring cell, the terminal device redistributed to the inter-frequency neighboring cell can perform MU-MIMO pairing with a terminal device that is on another beam of the inter-frequency neighboring cell, to increase an MU-MIMO pairing proportion. Alternatively, in this embodiment of this application, edge terminal devices on a heavy-load beam in a cell may be selected, and load of the edge terminal devices is redistributed to a point near or in a center (or a non-edge point) of an inter-frequency neighboring cell, so that optimal spectrum utilization can be achieved when these terminal devices are scheduled at the point near or in the center of the inter-frequency neighboring cell. Alternatively, in this embodiment of this application, a terminal device with heavy traffic may be selected, and load of the terminal device may be redistributed to an idle beam of an inter-frequency neighboring cell. This increases an MU-MIMO pairing proportion in the inter-frequency neighboring cell, and saves a transmission resource of a current cell. In conclusion, it can be learned that in this embodiment of this application, an average throughput of network-level users can be improved.

In an optional implementation, the information about the N candidate beams includes one or more of the following: a first measurement result obtained by the first terminal device by measuring a downlink reference signal carried on the N candidate beams; a second measurement result obtained by the access network device by measuring an uplink reference signal carried on the N candidate beams; information about whether the first terminal device is capable of sharing a transmission resource with another terminal device on the N candidate beams; spectral efficiency information of the first terminal device on the N candidate beams; or available resource information of the N candidate beams. Herein, this is merely an example of the information about the N candidate beams. In addition, the information about the N candidate beams may further include other information. This is not limited.

In an optional implementation, the method further includes: receiving the first measurement result from the first terminal device, where the first measurement result includes a measurement result obtained by the first terminal device by measuring a downlink reference signal carried on at least one of the N candidate beams, and includes an identifier of the at least one candidate beam. The access network device may obtain the first measurement result of the first terminal device. In this case, the access network device does not need to perform excessive processing, and only needs to receive the first measurement result from the first terminal device. An implementation is simple.

In an optional implementation, the receiving the first measurement result from the first terminal device includes: receiving a third measurement result from the first terminal device, where the third measurement result includes a measurement result obtained by the first terminal device by measuring a downlink reference signal carried on P beams, and includes identifiers of the P beams, and P is a positive integer; determining N beams in the P beams as the N candidate beams in the M candidate beams; and obtaining the first measurement result in the third measurement result. In an ideal case, the access network device receives, from the first terminal device, a measurement result obtained by the first terminal device by measuring the M candidate beams. However, in a measurement process, the first terminal device may not be able to measure some of the M candidate beams. In addition, the first terminal device may further measure a beam other than the M candidate beams. Therefore, the first terminal device may send the third measurement result to the access network device. The access network device may screen the third measurement result, and the access network device may ignore a measurement result of another beam that does not belong to the M candidate beams. In this way, the access network device can obtain the first measurement result from the third measurement result through screening. The first measurement result may include the result obtained by the first terminal device by measuring the M candidate beams, and in this case, M = N. Alternatively, because some of the M candidate beams cannot be measured, the first measurement result may include only a result obtained by the first terminal device by measuring remaining candidate beams in the M candidate beams, and in this case, M > N.

In an optional implementation, the method further includes: obtaining spectral efficiency information of the first terminal device on the at least one candidate beam based on an artificial intelligence technology and the measurement result that is obtained by the first terminal device by measuring the downlink reference signal carried on the at least one of the N candidate beams. Alternatively, the access network device may obtain the spectral efficiency information of the first terminal device by using a spectral efficiency artificial intelligence technology. In this way, a machine learning method is effectively used, so that the obtained spectral efficiency information can be accurate.

In an optional implementation, performance, evaluated based on the information about the N candidate beams, of the first terminal device on the first candidate beam meets the following relationship: (Performance of the first terminal device on the first beam - Performance of the first terminal device on the first candidate beam)/Performance of the first terminal device on the first candidate beam ≥ Fourth threshold, where the performance of the first terminal device on the first candidate beam is determined based on the information about the N candidate beams. The first candidate beam is one of the N candidate beams. If the performance of the first terminal device on the first candidate beam meets the foregoing relationship, it indicates that the performance of the first terminal device on the first candidate beam is better, and the first terminal device may be migrated to the first candidate beam. In addition, there may be another evaluation manner. This is not specifically limited.

According to a second aspect, another communication method is provided. The method may be performed by a terminal device, may be performed by another device including a function of the terminal device, or may be performed by a chip system or another functional module. The chip system or the functional module can implement the function of the terminal device, and the chip system or the functional module is, for example, disposed in the terminal device. The terminal device is, for example, a first terminal device. The method includes: receiving a handover command from an access network device; and being handed over to a second cell according to the handover command. The first terminal device is, for example, load of a first beam in a first cell. If the access network device determines that the first terminal device can be migrated to the second cell, the access network device may indicate the first terminal device to perform cell handover. The first terminal device may be handed over to the second cell, to implement load balancing of the first beam. Alternatively, if the second cell is a secondary cell of the first terminal device, the first terminal device may not need to perform cell handover. For example, the access network device indicates the second cell to schedule the first terminal device.

In an optional implementation, the method further includes: receiving measurement configuration information, where the measurement configuration information is used to configure a measurement gap; measuring, in the measurement gap, a beam in one or more inter-frequency neighboring cells; and sending an obtained measurement result to the access network device. The access network device may determine, based on an evaluation result of the first terminal device, a cell to which the first terminal device can be migrated. The first terminal device may measure the beam in the inter-frequency neighboring cell, and send the measurement result to the access network device. The measurement result may be used by the access network device to evaluate performance of the first terminal device in the inter-frequency neighboring cell, so that the first terminal device can be migrated to an inter-frequency neighboring cell with good performance, to improve communication quality of the first terminal device.

In an optional implementation, the method further includes: receiving a downlink reference signal in a third cell, where the third cell is a secondary cell of the first terminal device; measuring the downlink reference signal; and sending an obtained measurement result to the access network device. If one inter-frequency neighboring cell (for example, the third cell) is the secondary cell of the first terminal device, the access network device may not need to configure the measurement gap for the first terminal device. The first terminal device only needs to perform measurement in the secondary cell.

According to a third aspect, a communication apparatus is provided. The communication apparatus may be the access network device according to the first aspect and/or the second aspect. The communication apparatus has a function of the foregoing access network device. The communication apparatus is, for example, an access network device, a large device including the access network device, or a functional module in the access network device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to determine that a first beam of a first cell meets a load migration condition, where the first beam is a serving beam of a first terminal device; the processing unit is further configured to evaluate performance of the first terminal device on N candidate beams based on information about the N candidate beams, where the N candidate beams do not belong to the first cell, and N is a positive integer; and the processing unit is further configured to: when determining, based on a result of the evaluation, that there is a first candidate beam meeting a performance requirement in the N candidate beams, migrate the first terminal device to a second cell to which the first candidate beam belongs.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the access network device according to the first aspect and/or the second aspect.

According to a fourth aspect, a communication apparatus is provided. The communication apparatus may be the terminal device according to the first aspect and/or the second aspect. The communication apparatus has a function of the foregoing terminal device. The communication apparatus is, for example, a terminal device, a large device including the terminal device, or a functional module in the terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the third aspect.

In an optional implementation, the transceiver unit is configured to receive a handover command from an access network device. The processing unit is configured to be handed over to a second cell according to the handover command.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform a function of the terminal device according to the first aspect and/or the second aspect.

According to a fifth aspect, a communication system is provided, including the communication apparatus according to the third aspect and the communication apparatus according to the fourth aspect.

According to a sixth aspect, a computer-readable storage medium is provided. The computer-readable storage medium is configured to store a computer program or instructions. When the computer program or the instructions are run, the method according to the first aspect or the second aspect is implemented.

According to a seventh aspect, a computer program product including instructions is provided. When the computer program product runs on a computer, the method according to the first aspect or the second aspect is implemented.

According to an eighth aspect, a chip system is provided, including a processor and an interface. The processor is configured to invoke instructions from the interface and run the instructions, to enable the chip system to implement the method according to the first aspect or the second aspect.

### BRIEF DESCRIPTION OF DRAWINGS

FIG. 1 is a diagram of an application scenario according to an embodiment of this application;
FIG. 2 is a flowchart of a communication method according to an embodiment of this application;
FIG. 3 is a flowchart of an example of the communication method according to the embodiment shown in FIG. 2;
FIG. 4 is a diagram of an application result according to an embodiment of this application;
FIG. 5 is a diagram of an apparatus according to an embodiment of this application; and
FIG. 6 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms or concepts in embodiments of this application, to facilitate understanding of a person skilled in the art.

A terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: cellular communication, device-to-device communication (device-to-device, D2D), vehicle-to-everything (vehicle-to-everything, V2X), machine-to-machine/machine-type communications (machine-to-machine/machine-type communications, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, and a robot. The terminal device may be sometimes referred to as a UE, a terminal, an access station, a UE station, a remote station, a wireless communication device, a user apparatus, or the like. For ease of description, in embodiments of this application, an example in which the terminal device is a UE is used for description. For example, a first UE in the following may be replaced with a first terminal device.

A network device in embodiments of this application includes, for example, an access network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequent evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a pico base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a vehicle-to-everything (vehicle-to-everything, V2X) technology may be a road side unit (road side unit, RSU). The following uses an example in which the access network device is the base station for description. The base station may communicate with the terminal device, or may communicate with the terminal device via a relay station. The terminal device may communicate with the plurality of base stations in different access technologies.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used to describe the technical solutions provided in embodiments of this application.

Currently, with a receive diversity technology, a beamforming technology, a spatial multiplexing technology, and other technologies, a multiple-input multiple-output (multiple-input multiple-output, MIMO) technology can offer receive diversity, beamforming, spatial multiplexing, and other gains, increasing a system capacity and improving spectral efficiency. The spatial multiplexing technology includes a multi-user (multi-user multiple-input multiple-output, MU-MIMO) technology, and the MU-MIMO technology may support a plurality of UEs in performing communication by using a same time-frequency resource through spatial multiplexing.

When a plurality of UEs share a same time-frequency resource, the plurality of UEs keep a specific distance between each other. Generally, if two UEs are provided with communication by different beams, and a distance between the two UEs is greater than a specific threshold, the two UEs is capable of sharing a time-frequency resource.

However, in a current communication system, one beam serves a large quantity of UEs, and the UEs cannot share a same time-frequency resource. The base station needs to separately schedule different time-frequency resources for the UEs. This not only occupies more time-frequency resources, but also causes a waste of a large quantity of transmission resources. In addition, if a quantity of UEs served by the beam exceeds a quantity of UEs that can be served by the beam, congestion is caused, and finally communication performance deteriorates.

In view of this, the technical solutions in embodiments of this application are provided. The technical solutions provided in embodiments of this application may be applied to a 4th generation (the 4th generation, 4G) communication system, for example, a long term evolution (long term evolution, LTE) system, may be applied to a 5th generation (the 5th generation, 5G) communication system, for example, new radio (new radio, NR), or may be applied to a future communication system, for example, a 6G system.

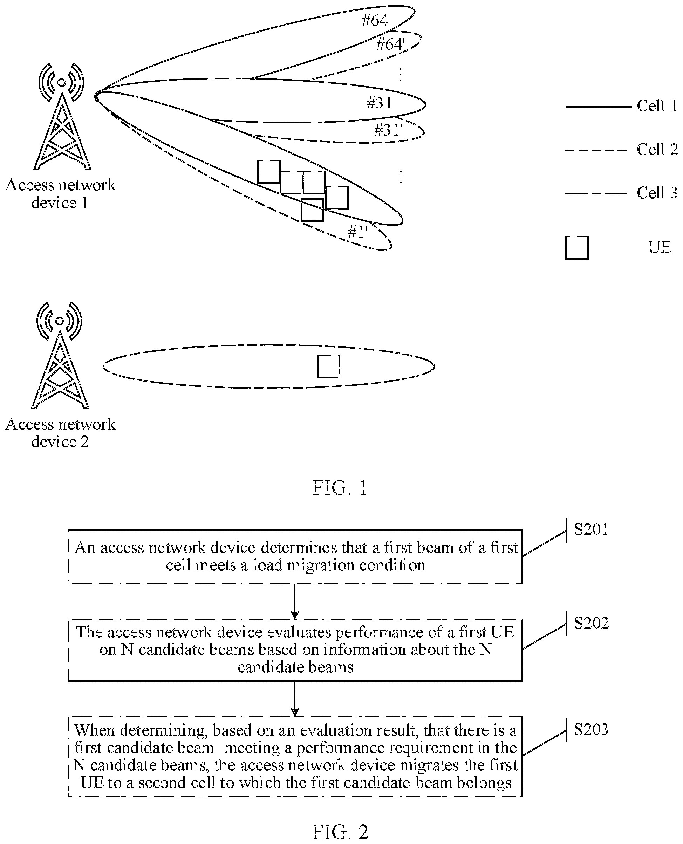

Embodiments of this application may be applied to a multi-band networking scenario, for example, a massive MIMO (Massive MIMO) networking scenario, or a hybrid networking scenario of massive MIMO and non-massive MIMO. An example in which the solution of this application is applied to a massive MIMO networking scenario is used. Refer to FIG. 1. In FIG. 1, an example in which an access network device 1 provides two cells, for example, a cell 1 and a cell 2, and an access network device 2 provides one cell, for example, a cell 3 is used for description. In FIG. 1, a beam #1' to a beam #64' belong to the cell 2, and a beam #1 to a beam #64 belong to the cell 1. The cell 1 and the cell 2 are inter-frequency cells, but both belong to a frequency band 1. It may be understood as that one frequency band (for example, the frequency band 1) may include a plurality of frequencies, and although both the cell 1 and the cell 2 belong to the frequency band 1, the cell 1 and the cell 2 correspond to different frequencies on the frequency band 1. Different beams in one cell correspond to a same frequency, that is, all correspond to a frequency of the cell. The cell 3 belongs to a frequency band 2. For example, the cell 3 may be a non-massive MIMO cell, or may have only one beam. Networking of the cell 1 and the cell 2 is a massive MIMO networking scenario. Networking of at least one of the cell 1 or the cell 2 and the cell 3 is a hybrid networking scenario of massive MIMO and non-massive MIMO. In addition, a block in FIG. 1 represents a UE, and a distribution status of UEs is merely an example.

To better describe embodiments of this application, the following describes methods provided in embodiments of this application with reference to the accompanying drawings. In the accompanying drawings corresponding to embodiments of this application, all optional steps are represented by dashed lines. The methods provided in embodiments of this application may be applied to the scenario shown in FIG. 1. For example, a first cell in embodiments of this application is the cell 1, the cell 2, or the cell 3 in FIG. 1. The first UE in embodiments of this application is a UE distributed on a first beam (any beam in the first cell) of the first cell. A second cell in embodiments of this application is any cell other than the first cell in FIG. 1. The access network device in embodiments of this application is the access network device 1 in FIG. 1.

The "beam" in embodiments of this application may include a downlink beam and/or an uplink beam. The uplink beam includes, for example, a sounding reference signal (sounding reference signal, SRS) beam. The downlink beam includes, for example, a channel state information-reference signal (channel state information-reference signal, CSI-RS) beam and/or a synchronization signal and physical broadcast channel (physical broadcast channel, PBCH) block (synchronization signal and PBCH block, SSB) beam.

FIG. 2 is a flowchart of a communication method according to an embodiment of this application.

S201: An access network device determines that a first beam of a first cell meets a load migration condition.

It may be understood that the load migration condition may also be referred to as a load balancing condition.

The first cell is, for example, any cell provided by the access network device. The first cell may cover a plurality of UEs, or the first cell may be a serving cell of a plurality of UEs. For example, a first UE is one of the UEs.

The access network device may provide one or more cells. If the access network device provides a plurality of cells, frequencies of these cells may be the same, or there may be cells with different frequencies in these cells.

The access network device may observe (or detect) some or all beams in each cell, to determine whether there is a beam that meets the load migration condition. In this embodiment of this application, the first cell is used as an example for description. The first cell may provide one or more beams. For example, according to FIG. 1, the first cell may provide 64 beams, and the first beam is, for example, any beam provided by the first cell. For example, after obtaining a load status of the first beam, the access network device may determine whether the first beam meets the load migration condition, or determine whether to start load balancing processing on the first beam. The access network device may observe load statuses of a plurality of beams, and therefore may separately determine whether the plurality of beams meet the load migration condition. Because the access network device processes different beams in a similar manner, the first beam is used as an example in this embodiment of this application.

The access network device may determine load of one beam based on a first parameter, to determine, based on the load of the beam, whether the beam meets the load migration condition. It may be understood that one UE may perform communication on one or more beams in one cell, and one of the beams is used as a serving beam of the UE. In this case, the UE is load of the beam. For example, one UE can measure downlink reference signals from a plurality of beams, and obtain reference signal received power (reference signal received power, RSRP). In this embodiment of this application, a beam corresponding to highest RSRP obtained by the UE through measurement may be determined as a serving beam of the UE.

The first parameter may include one or more of the following: a quantity of UEs covered by the beam, whether there is to-be-transmitted data on the beam, utilization of a control channel element (control channel element, CCE) on the beam, interference on the beam, or utilization of a physical resource block (physical resource block, PRB) on the beam.

If the beam is a downlink beam, and if the access network device buffers data to be transmitted on the beam, it is considered that there is the to-be-transmitted data on the beam. Alternatively, if the beam is an uplink beam, and if the access network device receives buffer information from one or more UEs, data indicated by the buffer information is to be transmitted on the beam, and it is considered that there is the to-be-transmitted data on the beam. Alternatively, regardless of whether the beam is a downlink beam or an uplink beam, if the access network device schedules a resource used to transmit data on the beam, it is considered that there is the to-be-transmitted data on the beam. Alternatively, regardless of whether the beam is a downlink beam or an uplink beam, if the access network device and the UE are performing data transmission on the beam, it is considered that there is the to-be-transmitted data on the beam.

The interference on the beam included in the first parameter may be co-channel downlink interference on the beam. The co-channel downlink interference may be understood as that the terminal device may receive a signal from a neighboring access network device in a coverage overlapping area of two or more neighboring access network devices, and the signal may affect demodulation performance of the terminal device. Alternatively, the interference on the beam included in the first parameter may be co-channel uplink interference on the beam. The co-channel uplink interference may be understood as that the access network device may receive signals from different terminal devices in a coverage overlapping area of two or more neighboring access network devices, and the signals may affect demodulation performance of the access network device.

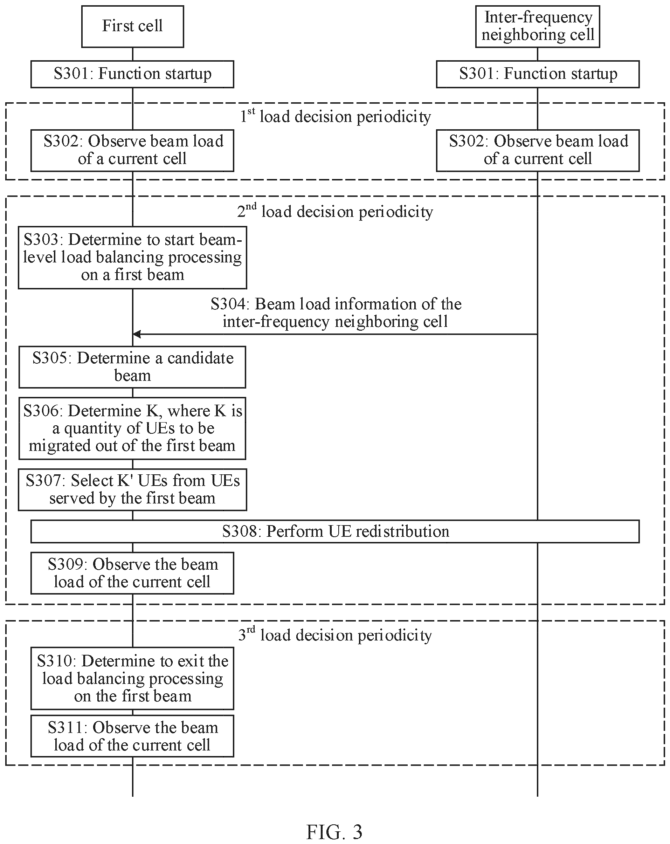

Optionally, the access network device may determine, based on a load decision periodicity, whether one beam meets the load migration condition. Refer to FIG. 3. The load decision periodicity is, for example, a periodicity used to determine whether the beam meets the load migration condition, or is understood as a periodicity used to observe a load status of the beam. In other words, the access network device may observe a beam load status of a cell based on the load decision periodicity, to determine whether the beam meets the load migration condition. FIG. 3 includes S302: Observe beam load of a current cell. For example, in a 1^{st} load decision periodicity, the access network device may observe a load status of each of some or all beams in the first cell (or the first cell may observe a load status of each of some or all beams in the first cell). An inter-frequency neighboring cell may also observe a load status of each of some or all beams in the inter-frequency neighboring cell. For example, an access network device to which the inter-frequency neighboring cell belongs may observe a load status of each of some or all beams in a cell provided by the access network device. In addition, FIG. 3 further includes S301: Function startup. It may be understood that, before the 1^{st} load decision periodicity, both the first cell and the inter-frequency neighboring cell perform the function startup. The function startup means to start a beam-level load balancing function. In other words, the access network device may determine whether to start a beam load migration solution provided in this embodiment of this application. For example, if determining that network resources are insufficient, the access network device may start the function to migrate UEs on some heavy-load beams to other beams, to increase a SU-MIMO pairing proportion of the UEs. This reduces resources scheduled for these UEs, to reduce resource overheads. It should be specially noted that the first cell and the inter-frequency neighboring cell may be cells of a same access network device, or may be cells of different access network devices.

Optionally, still refer to FIG. 3. In a 2^{nd} load decision periodicity, the access network device may determine whether to start beam-level load balancing processing on the first beam, or the access network device may determine whether to migrate load of the first beam to another cell. If the first beam meets the load migration condition, the access network device determines to start the beam-level load balancing processing on the first beam. FIG. 3 includes S303: The first cell determines to start the beam-level load balancing processing on the first beam. That is, in FIG. 3, that the first cell determines to start the beam-level load balancing processing on the first beam is used as an example. In addition, the access network device (or the first cell) may keep observing beam load in each load decision periodicity. For example, regardless of whether the beam-level load balancing processing on one or more beams is started in the 2^{nd} load decision periodicity, the access network device may continue to keep observing some or all beams in the first cell. It should be particularly noted that FIG. 3 further includes S309: The first cell observes the beam load of the current cell. Although S309 is a last step in the 2^{nd} load decision periodicity in FIG. 3, it does not mean that this step occurs at the end of the 2^{nd} load decision periodicity. This step may be performed throughout the 2^{nd} load decision periodicity.

Optionally, a possible load migration condition is that load of one beam is greater than a first threshold. For example, if the load of the first beam is greater than the first threshold, the access network device determines that the first beam meets the load migration condition, or the access network device determines to start the beam-level load balancing processing on the first beam (which may be referred to FIG. 3). If one beam meets the load migration condition, the access network device may migrate load of the beam to another cell. If FIG. 3 is used as an example, the access network device continuously observes the load status of the first beam in the 1^{st} load decision periodicity. For example, the access network device may determine the load status of the first beam for one or more times in the 1^{st} load decision periodicity (the access network device may determine the load status based on the foregoing first parameter). In other words, the access network device obtains one or more pieces of load information, and the one or more pieces of load information all correspond to the first beam. In this case, the load information used to determine whether the first beam meets the load migration condition is, for example, any piece of load information that is of the first beam and that is obtained by the access network device in the 1^{st} load decision periodicity, or an average value of a plurality of pieces of load information obtained by the access network device in the 1^{st} load decision periodicity.

Another possible load migration condition is that load of one beam is greater than the first threshold in first duration, and a length of the first duration is not limited in this application. For example, if the load of the first beam is greater than the first threshold in the first duration, the access network device determines that the first beam meets the load migration condition. That load of one beam is greater than the first threshold in the first duration may be understood as that the load of the beam is continuously greater than the first threshold in the first duration. The first duration is, for example, duration of a load decision periodicity. FIG. 3 is used as an example. The access network device continuously observes the load status of the first beam in the 1^{st} load decision periodicity. For example, the access network device determines load information of the first beam for one or more times in the 1^{st} load decision periodicity. In other words, the access network device obtains one or more pieces of load information, and the one or more pieces of load information all correspond to the first beam. In this case, for determining whether the first beam meets the load migration condition, in one determining manner, if the one or more pieces of load information are all greater than the first threshold, it is considered that the first beam meets the load migration condition, or in another determining manner, if an average value of the one or more pieces of load information is greater than the first threshold, it is considered that the first beam meets the load migration condition. Load information obtained at a time may be occasional to some extent. By introducing the first duration for decision, load information participating in the decision can be more accurate.

The first threshold may be a threshold of a parameter used to measure beam load. For example, the access network device determines load of one beam based on a quantity of UEs covered by the beam, and the first threshold may be a UE quantity threshold. The first threshold may be configured by the access network device, may be protocol-predefined, or the like. Optionally, the first threshold may alternatively be adjusted based on a network status.

S202: The access network device evaluates performance of the first UE on N candidate beams based on information about the N candidate beams.

The candidate beam is a beam to which a UE to be migrated out of the first beam may be migrated. In other words, the load of the first beam (or the UE on the first beam) may be migrated to the candidate beam. In this embodiment of this application, the access network device needs to migrate some or all UEs on the first beam to another beam, and the UE to be migrated out of the first beam is the UE that is on the first beam and that is to be migrated to another beam.

Before performing S202, the access network device may first obtain beam load information of the inter-frequency neighboring cell of the first cell, and the access network device may determine the candidate beam based on the beam load information. In a possible implementation of obtaining the beam load information of the inter-frequency neighboring cell of the first cell, the access network device may exchange beam load information of respective cells with another access network device, to obtain the beam load information of the inter-frequency neighboring cell of the first cell. For example, as shown in FIG. 3, after the function startup, the first cell and the inter-frequency neighboring cell may respectively observe beam load of respective cells in the 1^{st} load decision periodicity, and in the 2^{nd} load decision periodicity, if the first cell determines to start the beam-level load balancing processing on the first beam, the first cell may receive the beam load information of the inter-frequency neighboring cell from the inter-frequency neighboring cell (for example, S304 in FIG. 3). It may also be understood as that the access network device may send, to another access network device, load information of beams in some or all cells observed by the access network device; or the access network device may receive, from another access network device, load information of beams in a cell (including the inter-frequency neighboring cell of the first cell) provided by the another access network device. Specifically, different access network devices may communicate with each other through an Xn interface. Alternatively, in another possible implementation, the access network device may determine the beam load information of the inter-frequency neighboring cell of the first cell. For example, the access network device provides a plurality of cells (including the first cell). There are cells with different frequencies in the plurality of cells, and the cells with different frequencies are inter-frequency neighboring cells of each other. For example, if the first cell and a second cell in the plurality of cells are inter-frequency neighboring cells, the access network device may determine beam load information of the second cell. Either or both of the foregoing two possible implementations may be used.

According to FIG. 3, the access network device obtains the beam load information of the inter-frequency neighboring cell, and S305 may be performed: The first cell determines a candidate beam, or the access network device determines a candidate beam. For example, in S305, the access network device may select the candidate beam from beams of the inter-frequency neighboring cell for the load of the first beam. It should be understood that there may be one or more candidate beams. For ease of description, the beam of the inter-frequency neighboring cell is also referred to as an inter-frequency beam in the following. For example, for each inter-frequency beam whose load information is obtained, the access network device may determine whether the inter-frequency beam can be used as the candidate beam for the load of the first beam.

Optionally, in a manner of determining the candidate beam, the access network device determines, based on load of the inter-frequency beam and the load of the first beam, whether the inter-frequency beam can be used as the candidate beam. For example, if the inter-frequency beam meets the following relationship, the inter-frequency beam can be used as the candidate beam: (Load of the first beam - Load of the inter-frequency beam)/Load of the first beam≥ Fifth threshold

Load of the candidate beam is lower than the load of the first beam, to ensure communication quality of the UE after the UE is migrated to any one of candidate beams. The fifth threshold may be configured by the access network device, may be protocol-predefined, or the like. Optionally, the fifth threshold may be further adjusted based on the network status. This is not limited in this application.

For example, the access network device determines M inter-frequency beams from a plurality of inter-frequency beams as candidate beams in the foregoing manner, where M is a positive integer. The M candidate beams do not belong to the first cell. For example, the M candidate beams may belong to one or more cells other than the first cell, and a frequency of the one or more cells may be different from a frequency of the first cell. For example, a frequency of one of the M candidate beams is 3.5 GHz, and a frequency of the first beam is 2.1 GHz.

Optionally, if determining that the first beam meets the load migration condition, the access network device may randomly select one or more UEs from UEs served by the first beam to migrate to the candidate beam, and perform S203.

Alternatively, refer to FIG. 3. If determining that the first beam meets the load migration condition, the access network device may alternatively perform S306: The first cell determines K (or the access network device determines K), where K is a quantity of UEs to be migrated out of the first beam. Then, the access network device selects K UEs from the UEs served by the first beam, and then performs S202. It should be noted that the first UE is one of the K UEs. For example, the access network device may determine K based on a load status of the candidate beam. The following uses FIG. 3 as an example to describe a process in which the access network device determines K.

After determining the M candidate beams, the access network device may determine K. In a manner of determining K by the access network device, the access network device may separately determine, for the M candidate beams, a quantity of UEs to be migrated to each of the M candidate beams, and may determine M quantities in total. Then, the access network device determines K as a smallest value in the M quantities.

In a possible implementation, the access network device may determine K in the following manner: K = min{a × (Load of the first beam - Load of the candidate beam)/Load of the first beam} × Quantity of UEs in the first cell

In formula 2, a is a constant. For example, a is greater than 0 and less than or equal to 1. Optionally, a = 0.5, or may be another value. min{a × (Load of the first beam - Load of the candidate beam)/Load of the first beam} means that for each of the M candidate beams, a × (Load of the first beam - Load of the candidate beam)/Load of the first beam is calculated, to obtain M calculation results; and a smallest value is selected from the M calculation results. It may be understood as that a smallest value of load of the M candidate beams is determined by using min{a × (Load of the first beam - Load of the candidate beam)/Load of the first beam}, and the quantity of UEs may be obtained by multiplying the smallest value by the quantity of UEs in the first cell.

Because M may be greater than 1, and currently, a specific candidate beam in the M candidate beams to which the first UE is to be migrated is not determined, K is set to the smallest value of the M quantities, so that beam overload can be avoided. During actual application, a value of K may be another value, and that K is set to the smallest value of the M quantities is merely an example. This is not limited in this application.

The access network device determines K, and determines K UEs in the UEs served by the first beam. The K UEs are the UEs to be migrated out of the first beam. Optionally, the access network device may select, according to one or more of the following selection strategies (or selection conditions), the UE to be migrated out of the first beam, or if a UE served by the first beam meets one or more of the following selection strategies, the UE may be selected as the UE to be migrated out of the first beam:
(1) If the UE is capable of sharing a transmission resource with another UE on the first beam (or is capable of performing MU-MIMO pairing with another UE), performance of the UE sharing the transmission resource with the another UE and/or the another UE is lower than a second threshold;
(2) If the UE is incapable of sharing a transmission resource with another UE on the first beam (or is incapable of performing MU-MIMO pairing with another UE), where the transmission resource may include a time domain resource and a frequency domain resource;
(3) If the UE is located at an edge of a coverage area of the first cell; or
(4) If a traffic volume of the UE is greater than a third threshold.

The performance of the UE may be measured based on one or more of the following parameters: RSRP, reference signal received quality (reference signal received quality, RSRQ), a modulation and coding scheme (modulation and coding scheme, MCS), a signal to interference plus noise ratio (signal to interference plus noise ratio, SINR), or outer loop link adaptation (outer loop link adaptation, OLLA).

According to the foregoing selection strategies, a quantity of UEs in a heavy-load beam group is reduced, so that an opportunity for scheduling another UE is increased. In addition, when being scheduled on an idle beam of an inter-frequency neighboring cell, a UE redistributed to the inter-frequency neighboring cell can perform MU-MIMO pairing with a UE that is on another beam of the inter-frequency neighboring cell, to increase an MU-MIMO pairing proportion. Alternatively, in this embodiment of this application, edge UEs on a heavy-load beam in a cell may be selected, and load of the edge UEs is redistributed to a point near or in a center (in other words, a non-edge point) of an inter-frequency neighboring cell, so that optimal spectrum utilization can be achieved when these UEs are scheduled at the point near or in the center of the inter-frequency neighboring cell. Alternatively, in this embodiment of this application, UEs with heavy traffic may be selected, and load of the UEs may be redistributed to an idle beam of an inter-frequency neighboring cell. This increases an MU-MIMO pairing proportion in the inter-frequency neighboring cell, saves transmission resources of a current cell, and improves an average throughput of network-level users.

It should be noted that a quantity of UEs that meet the foregoing selection strategies may be less than K. Therefore, a quantity of UEs finally selected by the access network device may be K'. That is, the access network device (or the first cell) performs S307: Select K' UEs from the UEs served by the first beam, where K' is a positive integer less than or equal to K.

In the foregoing process, the access network device selects the K' UEs from the UEs served by the first beam, and the access network device may perform S203 for each of the K' UEs. S203 may be included in S308 shown in FIG. 3. S308: The access network device (or the first cell) performs UE redistribution, or the access network device (or the first cell) performs redistribution of the K' UEs. The UE redistribution may be understood as migrating a UE to another beam. To perform redistribution of a UE, the access network device may evaluate the UE, that is, the access network device may perform S203. The first UE is one of the K' UEs. The following uses the first UE as an example to describe an evaluation process of the access network device. The access network device may determine, based on a result of evaluating the performance of the first UE on the N candidate beams, a candidate beam to which the first UE is to be migrated. For example, the access network device evaluates the performance of the first UE on the N candidate beams based on first information, and may migrate the first UE to a candidate beam with better evaluated performance. The first information includes, for example, the information about the N candidate beams.

The first information includes, for example, information about the M candidate beams. However, in a possible case, the access network device may not necessarily be able to obtain the information about the M candidate beams, but only obtain the information about the N candidate beams in the M candidate beams. Therefore, the first information may include only the information about the N candidate beams. The N candidate beams may be a subset of the M candidate beams, and N is a positive integer less than or equal to M. Specifically, an example in which the candidate beam is a downlink candidate beam is used. If the access network device obtains information about the downlink candidate beam based on measurement performed by the first UE, theoretically, the first UE needs to measure all downlink candidate beams in the M candidate beams. However, in a measurement process of the first UE, the first UE may fail to receive downlink reference signals carried on some downlink candidate beams in the M candidate beams due to reasons such as improper network quality or measurement gap configurations. In this case, the first UE cannot measure these downlink candidate beams, and the access network device cannot obtain information about these downlink candidate beams. In this case, the access network device only obtains the information about the N candidate beams, but cannot obtain the information about the M candidate beams. In this case, N is less than M. A case in which the candidate beam is an uplink candidate beam is not described.

Optionally, the first information may include one or more of the following: a first measurement result obtained by the first UE by measuring a downlink reference signal carried on the N candidate beams, a second measurement result obtained by the access network device by measuring an uplink reference signal carried on the N candidate beams, spectral efficiency information of the first UE on the N candidate beams, information about whether the first UE is capable of sharing a transmission resource with another UE on the N candidate beams (or information about whether the first UE can perform MU-MIMO pairing with another UE on the N candidate beams), or available resource information of the N candidate beams. A downlink reference signal carried by one candidate beam is, for example, a CSI-RS or an SSB. The measurement result includes, for example, RSRP, RSRQ, or an SINR. Available resource information of one candidate beam is, for example, a proportion of a remaining available resource on the candidate beam to a total resource of the candidate beam. In addition, an "available resource" of one candidate beam refers to a resource that is on the candidate beam and that can be used by a UE migrated to the candidate beam. It may be understood that there are N first measurement results, N pieces of spectral efficiency information, or the like. In other words, the first information includes the foregoing information about each of the N candidate beams.

Optionally, the access network device may obtain the first information from the first UE, or may determine the first information.

If the N candidate beams include downlink candidate beams, the first UE may measure one or more of the downlink candidate beams, to obtain the first measurement result. The first measurement result may include respective identifiers of the one or more downlink candidate beams, and respective measurement results of the one or more downlink candidate beams. The first UE may send the first measurement result to the access network device. An identifier of a beam is, for example, an identity (identity, ID) of the beam, or an ID of a reference signal (for example, a CSI-RS, an SSB, or an SRS) transmitted on the beam. The first UE may measure a plurality of downlink beams. If the access network device determines that a downlink beam measured by the first UE belongs to the M candidate beams, the downlink beam may be used as one of the N candidate beams.

For example, if an inter-frequency neighboring cell is a secondary cell of the first UE, the access network device may obtain RSRP of a candidate beam of the inter-frequency neighboring cell based on a beam sweeping process of the secondary cell of the first UE. For example, based on the beam sweeping process of the secondary cell, the secondary cell delivers a downlink reference signal (for example, a CSI-RS or an SSB) by using one or more downlink candidate beams, and the first UE may obtain the first measurement result by measuring the downlink reference signal.

For another example, if an inter-frequency neighboring cell is not a secondary cell of the first UE, the first UE may obtain a measurement result of the inter-frequency neighboring cell based on inter-frequency CSI-RS radio resource management (radio resource management, RRM) measurement or SSB measurement. For example, the access network device may configure a measurement gap (gap) for the first UE, and the first UE may measure, in the measurement gap, a downlink reference signal delivered by the inter-frequency neighboring cell by using one or more downlink candidate beams, to obtain the first measurement result. The access network device has selected the M candidate beams. Therefore, the first information should include the information about the M candidate beams, and does not include information about another beam. In an optional implementation, the access network device may indicate an identifier of a to-be-measured candidate beam to the first UE. For example, the access network device sends identifiers of the M candidate beams to the first UE, so that the first UE can measure the M candidate beams (but as described above, the first UE may be unable to measure some of the candidate beams). The first UE may not measure a beam other than the M candidate beams. In this case, all measurement results sent by the first UE to the access network device belong to the first measurement result.

Alternatively, the access network device may not indicate an identifier of a to-be-measured candidate beam to the first UE. The first UE may measure a cell that can be found by the first UE. In this case, for example, the first UE can obtain a third measurement result through measurement, where the third measurement result may include results of measuring P beams by the first UE and identifiers of the P beams, and P is a positive integer. There may be an intersection or no intersection between the P beams and the M candidate beams. If there is an intersection between the P beams and the M candidate beams, the P beams may be the M candidate beams, and M = P; or the P beams include the M beams, and P > M; or the M beams include the P beams, and M > P; or some of the P beams do not belong to the M candidate beams, and remaining beams of the P beams may be a subset of the M candidate beams. In this case, the access network device may perform screening on the measurement result from the first UE. For example, the third measurement result sent by the first UE to the access network device includes a measurement result 1, the measurement result 1 includes a measurement result of a beam 1 and an identifier of the beam 1, and the access network device may determine, based on the identifier of the beam 1, whether the beam 1 is one of the M candidate beams. If the beam 1 is one of the M candidate beams, the measurement result 1 may belong to the first measurement result. If the beam 1 is not one of the M candidate beams, the access network device ignores the measurement result 1, that is, the first measurement result does not include the measurement result 1. It is equivalent to that the access network device may obtain the first measurement result from the third measurement result through screening.

If the N candidate beams include uplink candidate beams, the access network device may measure one or more of the uplink candidate beams, to obtain the second measurement result. For example, the first UE may send an uplink reference signal (for example, an SRS) by using one or more uplink candidate beams, and the access network device measures the uplink reference signal, to finally obtain the second measurement result.

Alternatively, the access network device may determine the measurement result of the candidate beam in another manner. For example, the access network device may determine the first measurement result by using an artificial intelligence (artificial intelligence, AI) technology. For example, a beam model may be obtained through training by using, as training data, a result of measuring a reference signal (for example, one or more of reference signals such as a CSI-RS, an SSB, or an SRS) on beams of a plurality of frequencies by a UE in one cell, where the beam model is, for example, an AI model. After obtaining the beam model through training, the access network device may apply the beam model to obtain a result of measuring an uplink beam by the UE. For example, input information of the beam model may include a result of measuring a downlink reference signal carried by a downlink beam by the UE and an identifier of the downlink reference signal (or the downlink beam), for example, include a result of measuring an SSB by the UE and an ID of the SSB. Output information of the beam model may include a result of measuring an uplink beam by the UE, a beam identifier corresponding to the measurement result, and the like. It is equivalent to that the access network device may obtain a measurement result of an uplink beam by using the beam model and a result of measuring a downlink reference signal by the UE. A training process may be completed by the access network device, or may be completed by a third-party device (for example, an AI network element), and a beam model obtained through training is sent to the access network device.

For example, one candidate beam is an uplink candidate beam, and the access network device may obtain, by using the beam model, a result of measuring the uplink candidate beam by the first UE. For example, the access network device may input a result of measuring one or more SSBs by the first UE and an ID of the one or more SSBs into the beam model, and the beam model may output an identifier of a corresponding uplink candidate beam and a measurement result of the uplink candidate beam. In this way, the access network device obtains the measurement result of the uplink candidate beam.

Optionally, the first information may include spectral efficiency information of the first UE on the N candidate beams, and the access network device may determine the spectral efficiency information of the first UE on the N candidate beams based on information such as the first measurement result of measuring the N candidate beams by the first UE and/or load information of the N candidate beams. Alternatively, the access network device may determine the spectral efficiency information of the first UE on the N candidate beams based on the AI technology.

For example, a spectral efficiency model may be obtained through training by using, as training data, a result of measuring a reference signal (for example, one or more of reference signals such as a CSI-RS, an SSB, or an SRS) on beams of a plurality of frequencies by a UE in one cell and some other information (for example, PRB utilization), where the spectral efficiency model is, for example, an AI model. After obtaining the spectral efficiency model through training, the access network device may apply the spectral efficiency model to obtain spectral efficiency information of the UE on the candidate beam.

Input information of the spectral efficiency model may include a result of measuring a downlink reference signal carried by a downlink beam by the UE and an identifier of the downlink reference signal, for example, include a result of measuring an SSB by the UE and an ID of the SSB. In addition, the input information of the spectral efficiency model may further include some other information, for example, PRB utilization. Output information of the spectral efficiency model may include spectral efficiency information of the UE on one or more beams (including a downlink beam and/or an uplink beam), and the spectral efficiency information is considered as spectral efficiency information of the UE on these beams. A training process may be completed by the access network device, or may be completed by a third-party device (for example, an AI network element), and the spectral efficiency model obtained through training is sent to the access network device.

For example, to obtain spectral efficiency information of the first UE on a plurality of beams (including an uplink beam and/or a downlink beam), the access network device may use the spectral efficiency model. For example, the access network device may input a result of measuring one or more SSBs by the first UE and an ID of the one or more SSBs into the spectral efficiency model, and further input some other information (for example, PRB utilization) into the spectral efficiency model. The spectral efficiency model may output spectral efficiency information. The spectral efficiency information may be considered as spectral efficiency information of the first UE on one or more beams. In this way, the access network device obtains the spectral efficiency information of the first UE on the candidate beam.

Optionally, the first information may include available resource information of the N candidate beams. Available resource information of one candidate beam may be remaining available resource information of the candidate beam. If an inter-frequency neighboring cell in which the N candidate beams are located is a cell provided by the access network device, the access network device may obtain the available resource information of the N candidate beams; or if an inter-frequency neighboring cell in which the N candidate beams are located is a cell provided by another access network device, the access network device may receive the available resource information of the N candidate beams from the access network device in which the inter-frequency neighboring cell is located. For example, after determining the N candidate beams, the access network device may request to obtain the available resource information of the N candidate beams from the inter-frequency neighboring cell to which the N candidate beams belong. In this case, the access network device may receive the available resource information of the N candidate beams from the access network device in which the inter-frequency neighboring cell is located.

Optionally, the first information may include the information about whether the first UE is capable of sharing a transmission resource with another UE on the N candidate beams. The information may be determined by the access network device based on factors such as load information on the N candidate beams.

In the foregoing manner, the access network device obtains the first information, and the access network device may evaluate the performance of the first UE on the N candidate beams. For example, the access network device may evaluate the performance of the first UE on the N candidate beams based on the first information.

It may be understood that the first information may include N pieces of sub-information, and one piece of the N pieces of sub-information includes information about one candidate beam. The access network device may evaluate, based on one piece of sub-information, a candidate beam corresponding to the sub-information, so that a candidate beam corresponding to an optimal or good evaluation result may be selected from N evaluation results.

For example, for any one of the N candidate beams, the access network device evaluates performance of the first UE on the candidate beam based on information about the candidate beam included in the first information, to determine whether the candidate beam meets a performance requirement. Performance of the first UE on one candidate beam is, for example, understood as communication quality of the first UE on the candidate beam. That is, evaluating performance of the first UE on one candidate beam may be understood as evaluating communication quality of the first UE on the candidate beam. If the evaluation result indicates that one candidate beam meets the performance requirement, the access network device may migrate the first UE to the candidate beam. For example, that one candidate beam meets the performance requirement may include that the candidate beam meets a requirement of the first UE, and/or load of the candidate beam is less than the load of the first beam (or load of the candidate beam is less than a sixth threshold). Load of a beam may be measured by using the first parameter. Therefore, comparing load of two beams (or comparing load of one beam with the sixth threshold) may be understood as comparing load determined based on the first parameter.

Optionally, for example, the requirement of the first UE is: (Performance of the first UE on the first beam - Performance of the first UE on the candidate beam)/Performance of the first UE on the candidate beam ≥ Fourth threshold

For example, if information about one candidate beam includes spectral efficiency information of the first UE on the candidate beam, the performance of the candidate beam in formula 3 may be the spectral efficiency information of the candidate beam. For another example, if information about one candidate beam includes spectral efficiency information of the first UE on the candidate beam and available resource information of the candidate beam, the performance of the candidate beam in formula 3 may be a value obtained based on the spectral efficiency information of the candidate beam and the available resource information. A manner of determining the performance of the first UE on the first beam is similar, and details are not described.

S203: When determining, based on the evaluation result, that there is a first candidate beam meeting the performance requirement in the N candidate beams, the access network device migrates the first UE to the second cell to which the first candidate beam belongs.

The evaluation result obtained by the access network device may include N evaluation sub-results. In the N evaluation sub-results, if only a candidate beam corresponding to one evaluation sub-result meets the selection condition, the candidate beam is the first candidate beam; or if candidate beams corresponding to a plurality of evaluation sub-results meet the selection condition, the access network device may randomly select one candidate beam from the candidate beams that meet the selection condition as the first candidate beam. In this embodiment of this application, an example in which the first candidate beam in the N candidate beams meets the selection condition is used. The access network device may determine a cell to which the first candidate beam belongs, for example, the second cell. In this case, the access network device may migrate the first UE to the second cell.

If the second cell is a secondary cell of the first UE, the access network device may perform load redistribution of the first UE in an offloading manner. For example, the first UE may not disconnect from the first cell, that is, the first UE may continue to be connected to the first cell, but the access network device may indicate the second cell to schedule the first UE, or it is understood as that the access network device may schedule the first UE in the second cell, or the access network device indicates another access network device that provides the second cell to schedule the first UE in the second cell. If the access network device stores service data of the first UE, the access network device may send the service data to the second cell or the like. An application scenario of this case is, for example, a dual-connectivity scenario. The first cell is, for example, a primary cell of the UE, and the second cell is a secondary cell of the UE.

Alternatively, if the second cell is not a secondary cell of the first UE, the access network device may indicate the first UE to perform cell handover, and a target cell is the second cell. In this case, the first UE may disconnect from the first cell, and access the second cell again.

Although the access network device determines that the first candidate beam is a beam to which the first UE should be migrated, when the first UE performs offloading or cell handover, the access network device may not indicate the first candidate beam, to reduce a change to a standard procedure. In other words, in this embodiment of this application, the access network device only indicates a cell to which the first UE should be migrated. After the first UE enters the second cell, the access network device may not sense a beam on which the first UE stays. Based on a beam selection procedure, there is a high probability that the first UE stays on the first candidate beam.

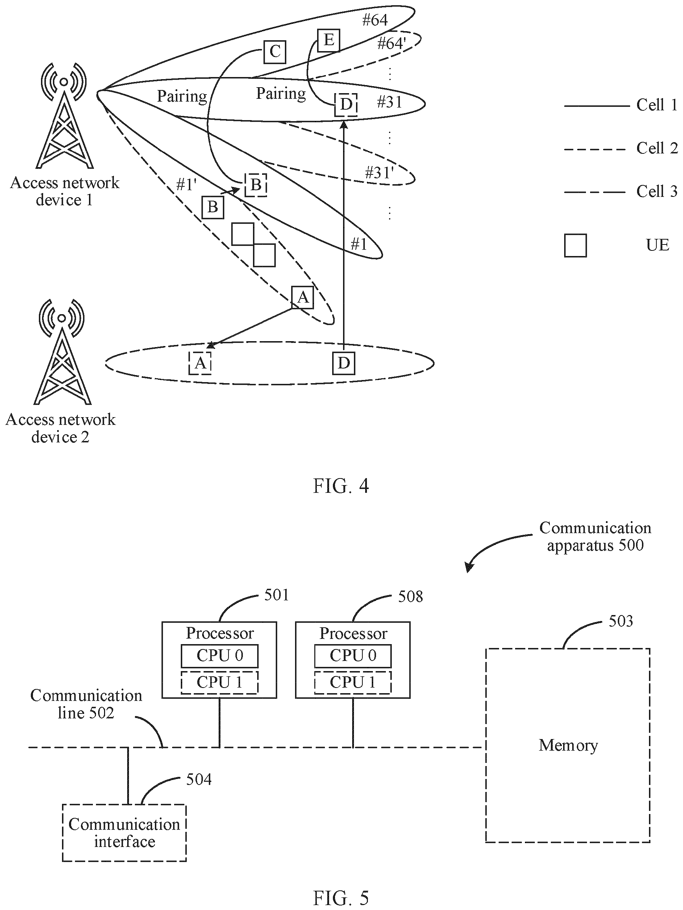

FIG. 4 is a diagram of a technical solution according to an embodiment of this application. For some descriptions of FIG. 4, refer to FIG. 1. In FIG. 4, for example, a UE A is redistributed from a beam #1' of a cell 2 to a beam of a cell 3. The UE A is an edge user of the cell 2. After the redistribution, the UE A may be located at a location that is in the cell 3 and that is close to an access network device. This can improve communication quality of the UE A, and reduce CCE overheads. A UE B is redistributed from the beam #1' of the cell 2 to a beam #1 of a cell 1, and the UE B can perform, on the beam #1 of the cell 1, MU-MIMO pairing with a UE C on a beam #64 of the cell 1. This increases an MU-MIMO pairing proportion in the cell 1, so that the cell 1 can schedule a same time-frequency resource for UEs successfully paired, saving resources of the cell 1. A UE D is redistributed from a beam of the cell 3 to a beam #31 of the cell 1. For example, the UE D is a UE with heavy traffic. In this way, a UE with heavy traffic in a non-massive MIMO cell can be selected, and load of the UE can be redistributed to an idle beam in a massive MIMO neighboring cell, increasing an MU-MIMO pairing proportion in the massive MIMO neighboring cell. In addition, the UE D can also perform MU-MIMO pairing with a UE E on the beam #64 of the cell 1. This increases an MU-MIMO pairing proportion in the cell 1, saving resources of the cell 1.

In addition, in FIG. 3, an example in which the access network device determines to exit the beam-level load balancing processing on the first beam is used. Still refer to FIG. 3. In a 3^{rd} load decision periodicity, S311 is included: The first cell (or the access network device) observes the beam load of the first cell. The access network device may continue to observe the load status of each of some or all beams in the first cell. In addition, for each observed beam, the access network device may continue to determine, based on an observation result obtained in the 2^{nd} load decision periodicity, whether to start the beam-level load balancing processing on these beams, or may determine, for a beam (for example, the first beam) on which the beam-level load balancing processing has been performed in the 2^{nd} load decision periodicity, whether to continue to perform the beam-level load balancing processing, and so on. FIG. 3 further includes S310: The first cell (or the access network device) determines to exit the load balancing processing on the first beam, that is, FIG. 3 uses an example in which the first cell (or the access network device) exits the load balancing processing on the first beam. In this way, the access network device may cyclically observe and determine whether to start the beam-level load balancing processing for a corresponding beam. This reduces a probability of beam heavy load and improves communication performance of the UE.

According to the technical solutions provided in embodiments of this application, distribution of different UEs on beams of different cells can be optimized, so that UEs that can perform MU-MIMO pairing are distributed on different beams of a same cell as much as possible. Further, cell edge users can be redistributed on a frequency band with good coverage performance, to improve an average throughput of entire network users.

In embodiments of this application, unless otherwise specified, a quantity of nouns represents "a singular noun or plural nouns", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a first threshold and a second threshold may be a same threshold, or may be different thresholds. In addition, this type of name does not indicate that values, units, priorities, importance degrees, or the like of the two thresholds are different. In addition, step numbers in embodiments described in this application are merely used to distinguish between different steps, but are not used to limit a sequence of the steps. For example, S201 may be performed before S202, may be performed after S202, or may be performed simultaneously with S202.

FIG. 5 is a diagram of a structure of a communication apparatus according to an embodiment of this application. The communication apparatus 500 may be the access network device in any one of the embodiments shown in FIG. 2 to FIG. 3 or a circuit system of the access network device, and is configured to implement the method corresponding to the access network device in the foregoing method embodiments. Alternatively, the communication apparatus 500 may be the UE (for example, the first UE) in any one of the embodiments shown in FIG. 2 to FIG. 3 or a circuit system of the UE (for example, the first UE), and is configured to implement the method corresponding to the UE in the foregoing method embodiments. For a specific function, refer to descriptions of the foregoing method embodiments. For example, a circuit system is a chip system.

The communication apparatus 500 includes at least one processor 501. The processor 501 may be configured to perform internal processing of the apparatus, to implement a specific control processing function. Optionally, the processor 501 includes instructions. Optionally, the processor 501 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 500 includes one or more memories 503, configured to store instructions. Optionally, the memory 503 may further store data. The processor and the memory may be separately disposed, or may be integrated together.

Optionally, the communication apparatus 500 includes a communication line 502 and at least one communication interface 504. Because the memory 503, the communication line 502, and the communication interface 504 are all optional, the memory 503, the communication line 502, and the communication interface 504 are all represented by dashed lines in FIG. 5.

Optionally, the communication apparatus 500 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 500 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 501 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 502 may include a path for information transmission between the foregoing components.

The communication interface 504 uses any apparatus like a transceiver, and is configured to communicate with another device or a communication network, such as an Ethernet, a radio access network (radio access network, RAN), a wireless local area network (wireless local area network, WLAN), or a wired access network.

The memory 503 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another optical disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in an instruction or data structure form and that can be accessed by a computer, but is not limited thereto. The memory 503 may exist independently, and may be connected to the processor 501 through the communication line 502. Alternatively, the memory 503 may be integrated with the processor 501.

The memory 503 is configured to store computer-executable instructions for executing the solutions of this application, and the execution is controlled by the processor 501. The processor 501 is configured to execute the computer-executable instructions stored in the memory 503, to implement the communication method provided in the foregoing embodiments of this application.

Optionally, the computer-executable instructions in this embodiment of this application may also be referred to as application program code. This is not specifically limited in this embodiment of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 508 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 5 is a chip, for example, a chip of the access network device or a chip of the UE (for example, a first UE), the chip includes the processor 501 (which may further include the processor 508), the communication line 502, the memory 503, and the communication interface 504. Specifically, the communication interface 504 may be an input interface, a pin, a circuit, or the like. The memory 503 may be a register, a cache, or the like. The processor 501 and the processor 508 may be a general-purpose CPU, a microprocessor, an ASIC, or one or more integrated circuits configured to control program execution of the communication method in any one of the foregoing embodiments.

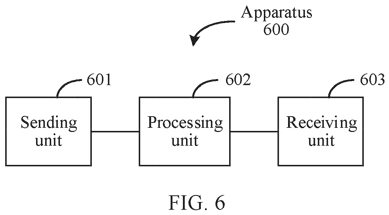

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when each functional module is obtained through division based on each corresponding function, FIG. 6 is a diagram of an apparatus. The apparatus 600 may be the access network device or the UE (for example, the first UE) in the foregoing method embodiments, or a chip in the access network device or a chip in the UE (for example, the first UE). The apparatus 600 includes a sending unit 601, a processing unit 602, and a receiving unit 603.

It should be understood that the apparatus 600 may be configured to implement steps performed by the access network device or the UE (for example, the first UE) in the methods in embodiments of this application. For related features, refer to the foregoing embodiments. Details are not described herein again.

Optionally, functions/implementation processes of the sending unit 601, the receiving unit 603, and the processing unit 602 in FIG. 6 may be implemented by the processor 501 in FIG. 5 invoking the computer-executable instructions stored in the memory 503. Alternatively, functions/implementation processes of the processing unit 602 in FIG. 6 may be implemented by the processor 501 in FIG. 5 invoking the computer-executable instructions stored in the memory 503, and the functions/implementation processes of the sending unit 601 and the receiving unit 603 in FIG. 6 may be implemented by the communication interface 504 in FIG. 5.

Optionally, when the apparatus 600 is a chip or a circuit, the functions/implementation processes of the sending unit 601 and the receiving unit 603 may alternatively be implemented by a pin, a circuit, or the like.

This application further provides a computer-readable storage medium. The computer-readable storage medium stores a computer program or instructions. When the computer program or the instructions are run, the method performed by the access network device or the UE (for example, the first UE) in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the access network device or the UE (for example, the first UE) in any one of the foregoing method embodiments.

An embodiment of this application further provides a processing apparatus, including a processor and an interface. The processor is configured to perform the method performed by the access network device or the UE (for example, the first UE) in any one of the foregoing method embodiments.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware part, or a design of any combination of the foregoing devices. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, a plurality of microprocessors, one or more microprocessors combined with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor may read information from the storage medium and write information to the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different parts of a terminal device.

These computer program instructions may alternatively be loaded on a computer or another programmable data processing device, so that a series of operation steps are performed on the computer or the another programmable device to generate computer-implemented processing. Therefore, the instructions executed on the computer or the another programmable device provide steps for implementing a specific function in one or more procedures in flowcharts and/or in one or more blocks in block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, applied to an access network device, wherein the method comprises:
determining that a first beam of a first cell meets a load migration condition, wherein the first beam is a serving beam of a first terminal device;
evaluating performance of the first terminal device on N candidate beams based on information about the N candidate beams, wherein the N candidate beams do not belong to the first cell, and N is a positive integer; and
when determining, based on a result of the evaluation, that there is a first candidate beam meeting a performance requirement in the N beams, migrating the first terminal device to a second cell to which the first candidate beam belongs.

2. The method according to claim 1, wherein
the load migration condition comprises that load of the first beam is greater than a first threshold.

3. The method according to claim 1 or 2, wherein the method further comprises:
determining a quantity K of terminal devices to be migrated out of the first beam, wherein K is a positive integer.

4. The method according to claim 3, wherein the determining a quantity K of terminal devices to be migrated out of the first beam comprises:
determining M candidate beams, wherein the M candidate beams are different from the first beam, and the M candidate beams do not belong to the first cell;
determining a quantity of terminal devices on the first beam to be migrated to each of the M candidate beams, to obtain M quantities in total, wherein M is a positive integer; and
determining a smallest value in the M quantities as K.

5. The method according to claim 4, wherein the determining a quantity of terminal devices on the first beam to be migrated to each of the M candidate beams comprises:
determining, based on the load of the first beam and load of each of the candidate beams, the quantity of terminal devices on the first beam to be migrated to each of the candidate beams.

6. The method according to claim 4 or 5, wherein K meets the following relationship: K = min{0.5 × (Load of the first beam - Load of each of the candidate beams)/Load of the first beam} × Quantity of terminal devices in the first cell, wherein
min means to return a smallest value, and the load of each of the candidate beams belongs to load of the M candidate beams.

7. The method according to any one of claims 4 to 6, wherein each of the candidate beams is determined based on the load of the first beam and the load of each of the candidate beams.

8. The method according to claim 7, wherein the method further comprises:
obtaining load information of each of the candidate beams.

9. The method according to any one of claims 4 to 8, wherein the method further comprises:
selecting K' terminal devices from one or more terminal devices served by the first beam, to migrate the K' terminal devices to the N candidate beams, wherein the K' terminal devices are terminal devices that meet a selection condition in the K terminal devices, the first terminal device is one of the K' terminal devices, and K' is a positive integer less than or equal to K.

10. The method according to claim 9, wherein the selection condition comprises one or more of the following:
the first terminal device is capable of sharing a transmission resource with another terminal device on the first beam, and performance of the first terminal device sharing the transmission resource and/or the another terminal device is lower than a second threshold, wherein the transmission resource comprises a time domain resource and a frequency domain resource;
the first terminal device is incapable of sharing a transmission resource with another terminal device on the first beam, wherein the transmission resource comprises a time domain resource and a frequency domain resource;
the first terminal device is located at an edge of the first cell; or
a traffic volume of the first terminal device is greater than a third threshold.

11. The method according to any one of claims 1 to 10, wherein the information about the N candidate beams comprises one or more of the following:
a first measurement result obtained by the first terminal device by measuring a downlink reference signal carried on the N candidate beams;
a second measurement result obtained by the access network device by measuring an uplink reference signal carried on the N candidate beams;
information about whether the first terminal device is capable of sharing a transmission resource with another terminal device on the N candidate beams;
spectral efficiency information of the first terminal device on the N candidate beams; or
available resource information of the N candidate beams.

12. The method according to claim 11, wherein the method further comprises:
receiving the first measurement result from the first terminal device, wherein the first measurement result comprises a measurement result obtained by the first terminal device by measuring the downlink reference signal carried on the N candidate beams, and comprises identifiers of the N candidate beams.

13. The method according to claim 12, wherein the receiving the first measurement result from the first terminal device comprises:
receiving a third measurement result from the first terminal device, wherein the third measurement result comprises a measurement result obtained by the first terminal device by measuring a downlink reference signal carried on P beams, and comprises identifiers of the P beams, and P is a positive integer;
determining N beams in the P beams as the N candidate beams in the M candidate beams; and
obtaining the first measurement result in the third measurement result.

14. The method according to any one of claims 11 to 13, wherein the method further comprises:
obtaining the spectral efficiency information of the first terminal device on the N candidate beams based on an artificial intelligence AI technology and the measurement result that is obtained by the first terminal device by measuring the downlink reference signal carried on the N candidate beams.

15. The method according to any one of claims 1 to 14, wherein performance, evaluated based on the information about the N candidate beams, of the first terminal device on the first candidate beam meets the following relationship: (Performance of the first terminal device on the first beam - Performance of the first terminal device on the first candidate beam)/Performance of the first terminal device on the first candidate beam ≥ Fourth threshold, wherein
the performance of the first terminal device on the first candidate beam is determined based on the information about the N candidate beams.

16. A communication apparatus, comprising:
a processing unit, configured to determine that a first beam of a first cell meets a load migration condition, wherein the first beam is a serving beam of a first terminal device;
the processing unit is further configured to evaluate performance of the first terminal device on N candidate beams based on information about the N candidate beams, wherein the N candidate beams do not belong to the first cell, and N is a positive integer; and
the processing unit is further configured to: when determining, based on a result of the evaluation, that there is a first candidate beam meeting a performance requirement in the N candidate beams, migrate the first terminal device to a second cell to which the first candidate beam belongs.

17. The communication apparatus according to claim 16, wherein
the load migration condition comprises that load of the first beam is greater than a first threshold.

18. The communication apparatus according to claim 16 or 17, wherein the processing unit is further configured to determine a quantity K of terminal devices to be migrated out of the first beam, wherein K is a positive integer.

19. The communication apparatus according to claim 18, wherein the processing unit is configured to determine, in the following manner, the quantity K of terminal devices to be migrated out of the first beam:
determining M candidate beams, wherein the M candidate beams are different from the first beam, and the M candidate beams do not belong to the first cell;
determining a quantity of terminal devices on the first beam to be migrated to each of the M candidate beams, to obtain M quantities in total, wherein M is a positive integer; and
determining a smallest value in the M quantities as K.

20. The communication apparatus according to claim 19, wherein the processing unit is configured to determine, in the following manner, the quantity of terminal devices on the first beam to be migrated to each of the M candidate beams:
determining, based on the load of the first beam and load of each of the candidate beams, the quantity of terminal devices on the first beam to be migrated to each of the candidate beams.

21. The communication apparatus according to claim 19 or 20, wherein the processing unit is further configured to obtain load information of each of the candidate beams.

22. The communication apparatus according to any one of claims 19 to 21, wherein the processing unit is further configured to select K' terminal devices from one or more terminal devices served by the first beam, to migrate the K' terminal devices to the N candidate beams, wherein the K' terminal devices are terminal devices that meet a selection condition in the K terminal devices, the first terminal device is one of the K' terminal devices, and K' is a positive integer less than or equal to K.

23. The communication apparatus according to any one of claims 16 to 22, wherein the communication apparatus further comprises a transceiver unit, configured to receive a first measurement result from the first terminal device, wherein the first measurement result comprises a measurement result obtained by the first terminal device by measuring a downlink reference signal carried on at least one of the N candidate beams, and comprises an identifier of the at least one candidate beam.

24. The communication apparatus according to claim 23, wherein
the transceiver unit is configured to receive a third measurement result from the first terminal device, wherein the third measurement result comprises a measurement result obtained by the first terminal device by measuring a downlink reference signal carried on P beams, and comprises identifiers of the P beams, and P is a positive integer;
the processing unit is configured to determine N beams in the P beams as the N candidate beams in the M candidate beams; and
the processing unit is further configured to obtain the first measurement result in the third measurement result.

25. The communication apparatus according to claim 23 or 24, wherein the processing unit is further configured to obtain spectral efficiency information of the first terminal device on the at least one candidate beam based on an artificial intelligence technology and the measurement result that is obtained by the first terminal device by measuring the downlink reference signal carried on the at least one of the N candidate beams.

26. The communication apparatus according to any one of claims 16 to 25, wherein performance, evaluated based on the information about the N candidate beams, of the first terminal device on the first candidate beam meets the following relationship: (Performance of the first terminal device on the first beam - Performance of the first terminal device on the first candidate beam)/Performance of the first terminal device on the first candidate beam ≥ Fourth threshold, wherein
the performance of the first terminal device on the first candidate beam is determined based on the information about the N candidate beams.

27. A communication apparatus, comprising a unit configured to perform the method according to any one of claims 1 to 15.

28. A computer-readable storage medium, wherein the computer-readable storage medium is used to store a computer program, and when the computer program is run on a computer, the computer is enabled to perform the method according to any one of claims 1 to 15.

29. A chip system, wherein the chip system comprises:
a processor and an interface, wherein the processor is configured to invoke instructions from the interface and run the instructions, and when the processor executes the instructions, the method according to any one of claims 1 to 15 is implemented.

30. A computer program product, wherein the computer program product comprises a computer program, and when the computer program is run on a computer, the computer is enabled to perform the method according to any one of claims 1 to 15.
